# EUROPEAN PATENT APPLICATION

(11) **EP 0 968 856 A2**
(43) Date of publication of application: **05.01.2000**
(21) Application number: 99110713.7
(22) Date of filing: 04.06.1999
(51) Int. Cl.: B60H 1/00

(54) **Coating panel, particularly for motor vehicles**

(30) Priority: 05.06.1998 IT TO980487
(71) Applicant: SAN VALERIANO S.P.A., I-10060 Virle Piemonte (IT)
(72) Inventor: Tasca, Franco, 10060 Virle Piemonte (Torino) (IT); Demichelis, Umberto, 36016 Thiene (Vicenza) (IT); Marchisio, Enzo, 10064 Pinerolo (Torino) (IT)
(74) Representative: Rambelli, Paolo

(57) **Abstract**

A soundproofing lining panel comprises a flat or shaped, load-bearing, structural element (2) having two main walls (4, 6) connected to one another by a plurality of interconnection elements (8) defining, together with the walls, a plurality of flow ducts (10), and at least one aesthetic covering layer (14) applied to the outer face of one of the walls (6); at least the wall (6) which is covered by the aesthetic covering layer (14) has a plurality of through-holes (12) communicating with the flow-ducts (10) and the covering layer (14) is permeable to air; optionally, the panel has associated manifold means communicating with an air-conditioning circuit and with the flow ducts to enable air to be taken in from the environment in which the panel is fitted or to enable air to be admitted to the environment through the holes.

## Description

The present invention relates to a lining panel, particularly for transport means, of the type comprising a flat or shaped, load-bearing, structural element which can confer characteristics of stiffness on the panel, and at least one covering layer with aesthetic characteristics which is applied to one face of the load-bearing element.

An object of the invention is to provide a panel of the type mentioned above which has improved soundproofing characteristics.

Another object of the invention is to provide a panel useful as a thermal conditioning means or for purifying the air in an environment in which it is fitted such as, for example, the passenger compartment of a motor vehicle or a railway carriage.

Another object of the invention is to provide a lining panel having the characteristics mentioned above which is made of material which can easily be recycled but which nevertheless has stiffness characteristics useful for structural applications, with a low weight.

In view of these objects, the subject of the invention is a lining panel comprising a flat or shaped, load-bearing, structural element having two main walls connected to one another by a plurality of interconnection elements defining, together with the walls, a plurality of flow ducts, and at least one aesthetic covering layer applied to the outer face of one of the walls, characterized in that the wall of the load-bearing element which is covered by the aesthetic covering layer has a plurality of through-holes communicating with the flow ducts, and in which the covering layer is permeable to air.

Further characteristics and subjects of the invention are defined by the following claims.

It has been found that the presence of the holes, which are distributed over the wall of the load-bearing structural element in the manner of a matrix, substantially improves the soundproofing characteristics of the panel.

According to a preferred embodiment, the panel may be used as an air-conditioning device for an environment in which it is fitted as a lining, in order to achieve an exchange of air by taking air in through the holes or by supplying thermal conditioning air through the holes.

For this purpose, the panel preferably has associated manifold means communicating with the flow ducts and the manifold means are arranged for connection to means for bringing about a flow such as, for example, an air-conditioning circuit of a motor vehicle, in a manner such that, when the means for bringing about a flow are activated, the air can flow in a closed circuit through the plurality of through-holes, the flow ducts, and the manifold means.

Naturally, in this case, the panel can be used as an intake panel, in which case the air is taken in through the holes, and flows along the ducts as far as the manifold means in order to be discharged to the exterior or, alternatively, the air can be supplied to the manifold means by the means for bringing about a flow, in order to be made to flow along the flow ducts and to be supplied through the through-holes to the environment in which the panel is fitted.

Further characteristics and advantages of the panel according to the invention will become clear from the following detailed description given with reference to the appended drawings, provided purely by way of non-limiting example, in which:

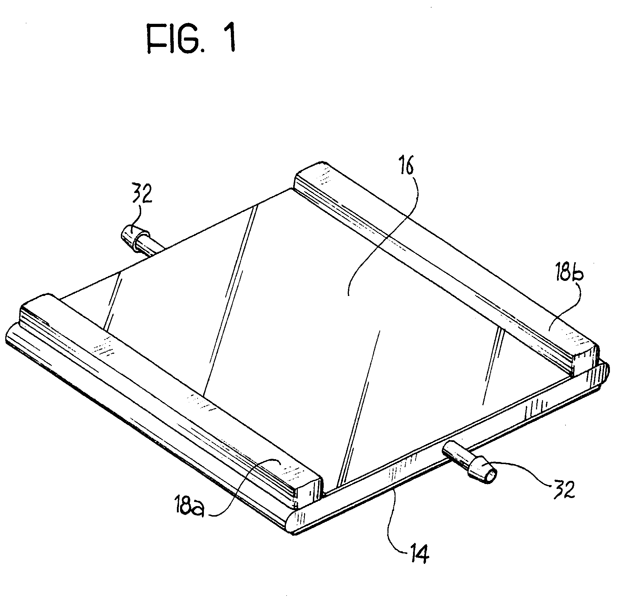

Figure 1 is a perspective view of a panel according to the invention,
Figure 2 is a view of the panel of Figure 1 from below,
Figure 3 is a view of the panel of Figure 1 from above,
Figure 4 is a cross-section taken on the line IV-IV of Figure 3,
Figure 5 is a cross-section taken on the line V-V of Figure 3, and
Figure 6 is a cross-section taken on the line VI-VI of Figure 3.

The appended drawings show an embodiment of the panel which can be used as an air-conditioning and soundproofing device.

In the most usual embodiment, the panel comprises a load-bearing structure in the form of a sheet 2, preferably made of plastics material, which has an upper wall 4 and a lower wall 6. The walls are connected to one another by a plurality of longitudinal baffles 8 which define, together with the walls 4 and 6, a plurality of flow ducts which, in the embodiment shown, are parallel to one another.

The load-bearing element or sheet 2 is preferably made of a thermoplastics material, particularly such as polyethylene, polypropylene, polyvinyl chloride, ABS or polyamide, or may be produced as a continuous profiled section by known extrusion methods.

For example, the load-bearing sheet may be constituted by a sheet of commercially-available material such as Kartonplast®. The longitudinal baffles 8 may be perpendicular to the main walls 4 and 6 or may be oblique. The width of the flow ducts may be varied at will according to the specific characteristics required, both with regard to the stiffness of the panel and according to the required blowing or intake air-flow characteristics.

The characteristics of the load-bearing element are not intended to be limited to the structure described in the drawings. Thus, for example, the load-bearing element may also be constituted by a structure in which the two main walls 4 and 6 are connected to one another by discontinuous connecting elements so that the flow ducts intercommunicate.

It is also possible to use a laminar structure of thermoplastics material formed by at least three layers including an upper layer, a lower layer and an intermediate layer provided with a plurality of hollow projections extending from a general plane of interconnection. The projections may have open or closed tops. The three layers are connected to one another rigidly in the general plane and at the tops of the projections, forming a cellular sandwich structure which has the required characteristics of stiffness for the application of the panel, with intercommunicating flow ducts.

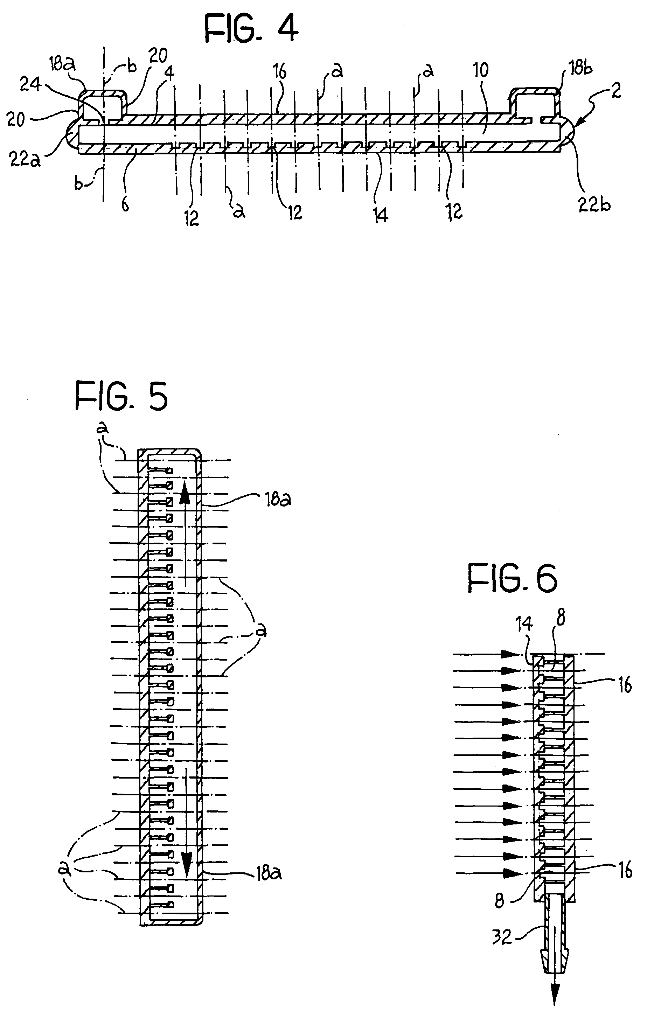

The lower wall 6 which is intended to face towards the environment in which the panel is fitted as a lining in use has a plurality of through-holes 12 the axes of which are indicated a in Figure 4 and which communicate with the flow ducts 10. By way of example, with reference to the embodiment shown in the drawings, the flow ducts have a transverse width of the order of 3-5 mm, preferably 3.5 mm, and the axes of the holes, the width of which is about 2-3 mm, are spaced, in the direction parallel to the flow ducts, at intervals of about 5 mm. The distance between the axes of the holes in the direction perpendicular to the flow ducts is approximately equal to the transverse width of the ducts.

An aesthetic covering layer 14 is applied to the wall 6 and may be constituted by a fabric, a non-woven fabric such as, for example, a needle-felted non-woven fabric of polyester fibres, or by a sheet plastics material such as, for example, polyvinyl chloride.

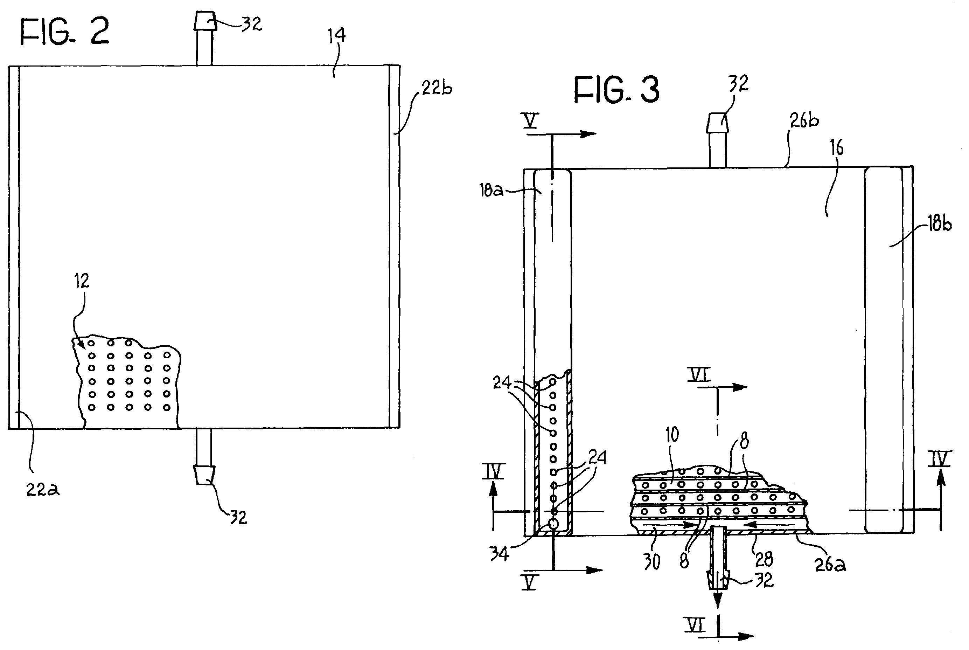

The covering layer is permeable to air and, for this purpose, may be constituted by a material which is itself permeable to air or, alternatively, the through-holes 12 may extend through the covering layer. In the embodiment of Figure 2, the covering layer 14 is itself permeable to air and the through-holes 12 are not visible from the exterior and are shown in a cut-away portion.

The application of the covering layer 14 may be performed at the coextrusion stage, together with the extrusion of the load-bearing sheet 2.

Preferably, one or more covering layers, preferably soundproofing layers 16, are applied to the other wall 4 of the panel. For example, the wall 4 may be covered by a sheet of expanded polyurethane to which a second layer, for example, made of a non-woven fabric, may be applied.

The upper wall 4 may also optionally have a plurality of through-holes which may extend through the covering layers.

As shown in the drawings, the panel has manifold means, indicated 18a and 18b. These manifold means comprise at least one duct-like element 18a the side walls 20 of which are fixed in a leaktight manner to one of the walls of the load-bearing sheet; in the embodiment shown, they are fixed to the upper wall 4, adjacent one side edge of the panel.

The manifold means may comprise a second duct-like manifold 18b positioned at the other side edge of the panel.

The side edges 22a and 22b of the panel are closed by end walls.

The manifold 18a, and the manifold 18b if it is present, communicate with the flow ducts through a plurality of through-holes 24 the axes of which are indicated b in Figure 4. Connection means associated with the manifold put the manifold into communication with means (not shown) for bringing about a flow, for example, with an air-conditioning circuit of the motor vehicle.

In the embodiment shown, the panel has, at each side edge 26a, 26b thereof, an end baffle or wall 28 defining a peripheral flow duct 30 which does not have through-holes in its upper or lower wall.

A connector 32 associated with the baffle 28 can be connected to a pipe of the air-conditioning circuit of a motor vehicle or the like which communicates with the duct 30. The duct 30 in turn communicates with one or both of the manifolds 18a and 18b through a through-hole 34.

Thus, when the connector 32 is connected to an air-intake device, the air is taken in through the through-holes 12 and flows along the flow ducts 10 in order to be collected in the manifolds 18a and 18b from which it flows along the duct 30, through the respective through-hole 34, in order to be evacuated through the connectors 32.

Naturally, in the same manner, it is intended that the air, for example, coming from an air-conditioning circuit of a motor vehicle may be supplied through the connector 32 in order to be admitted to the environment through the holes 12.

The panel according to the invention may have various applications. With regard purely to its soundproofing characteristics, it may be used as a lining panel in all applications in which soundproofing lining panels are required, preferably in a motor vehicle. The panel may be flat or, when it is made of a thermoplastic material, may be shaped by thermoforming and thus can also be adapted for lining shaped structures.

In the embodiment in which the panel acts as an air-conditioning device, the preferred application is as a panel for lining a motor-vehicle roof. In this case, the panel is connected to the air-conditioning circuit of the motor vehicle by the connection means and is used, in particular, for thermal conditioning by taking in hot air from the passenger compartment of the motor vehicle or by admitting a flow of conditioned air into the passenger compartment.

Naturally, the principle of the invention remaining the same, the forms of embodiment and details of construction may be varied widely with respect to those described and illustrated by way of non-limiting example.

Thus, for example, the shape of the manifolds and their arrangement may be varied and the thickness of the panel and the size of the flow ducts and of the respective holes may also be selected in dependence on specific requirements.

## Claims

1. A lining panel, particularly for transport means, comprising a flat or shaped, load-bearing, structural element (2) having two main walls (4, 6) connected to one another by a plurality of interconnection elements (8) defining, together with the walls, a plurality of flow ducts (10), and at least one aesthetic covering layer (14) applied to the outer face of one of the walls (6), characterized in that at least the wall (6) which is covered by the aesthetic covering layer (14) has a plurality of through-holes (12) communicating with the flow ducts (10), and in which the covering layer (14) is permeable to air.

2. A lining panel according to Claim 1, characterized in that the plurality of holes (12) in the covered main wall extends through the covering layer (14).

3. A lining panel according to Claim 1 or Claim 2, in which the covering layer is a woven or non-woven fabric.

4. A lining panel according to Claim 2, in which the covering layer is a sheet of plastics material.

5. A lining panel according to any one of Claims 1 to 4, in which both walls (4, 6) of the structural element (2) are perforated.

6. A lining panel according to any one of Claims 1 to 5, further comprising a soundproofing covering layer (16) applied to the other of the two walls (4) of the load-bearing element (2).

7. A lining panel according to any one of the preceding claims, in which the load-bearing structural element (2) is made of thermoformable plastics material.

8. A lining panel according to any one of Claims 1 to 7, characterized in that it comprises manifold means (18a, 18b) communicating with the ducts (10) and connectible to means for bringing about a flow, in a manner such that, when the means for bringing about a flow are activated, the air can flow through the holes (12), the ducts (10), and the manifold means (18a, 18b).

9. A lining panel according to any one of the preceding claims, in which the load-bearing structural element (2) is formed by two substantially parallel main walls (4, 6) connected to one another by a plurality of longitudinal baffles (8) defining substantially parallel, separate, longitudinal flow ducts (10).

10. A lining panel according to Claim 8, characterized in that the manifold means comprise at least one duct-like element (18a) the side walls (20) of which are fixed in a leaktight manner to one of the walls (4, 6), adjacent the longitudinal edges (22a, 22b) of the panel, and in which the flow ducts (10) communicate with the duct-like element (18a) through a plurality of through-holes (24) extending through the said wall, the duct-like element being in flow communication with connecting means (30, 32) connectible to means for bringing about a flow.

11. A lining panel according to Claim 10, in which the load-bearing structural element (2) has at least one peripheral flow duct (30) communicating with the manifold means (18a, 18b) through an opening (34) in one of the walls (4, 6) to which wall the manifold means are connected, the flow duct being in fluid communication with a connecting element (32) connectible to the means for bringing about a flow.

12. A lining panel according to any one of Claims 1 to 11, characterized in that the load-bearing structural element (2) comprises two main walls (4, 6) connected to one another by discontinuous interconnection elements (8) so as to define intercommunicating flow ducts.

13. A lining panel according to any one of the preceding claims, particularly a panel for lining the roof of a motor vehicle.

14. An air-conditioning system for a motor vehicle comprising at least one panel according to any one of the preceding claims and means for bringing about a flow, communicating with the panel through manifold means associated with the panel and communicating with the flow ducts.
